(19) Europäisches Patentamt
European Patent Office
Office européen des brevets

(11) EP 4 117 071 A1

(12) **EUROPEAN PATENT APPLICATION**
published in accordance with Art. 153(4) EPC

(43) Date of publication:
**11.01.2023 Bulletin 2023/02**

(21) Application number: **21764832.8**

(22) Date of filing: **26.01.2021**

(51) International Patent Classification (IPC):
***H01M 10/0562*** *(2010.01)* ***H01M 4/62*** *(2006.01)*
***H01M 10/052*** *(2010.01)* ***C01B 25/14*** *(2006.01)*
***H01B 1/06*** *(2006.01)*

(52) Cooperative Patent Classification (CPC):
**C01B 25/14; H01B 1/06; H01M 4/62; H01M 10/052; H01M 10/0562;** Y02E 60/10

(86) International application number:
**PCT/KR2021/001011**

(87) International publication number:
**WO 2021/177598 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.03.2020 KR 20200028590**

(71) Applicant: **Samsung SDI Co., Ltd.**
**Yongin-si, Gyeonggi-do 17084 (KR)**

(72) Inventors:
- **KITAJIMA, Shintaro**
**Suwon-si, Gyeonggi-do 16678 (KR)**
- **TSUJIMURA, Tomoyuki**
**Yokohama-shi, Kanagawa 230--0027 (JP)**
- **KIM, Soyeon**
**Suwon-si, Gyeonggi-do 16678 (KR)**
- **KIM, Hyunseok**
**Suwon-si, Gyeonggi-do 16678 (KR)**
- **RYU, Saebom**
**Suwon-si, Gyeonggi-do 16678 (KR)**
- **AIHARA, Yuichi**
**Yokohama-shi, Kanagawa 230--0027 (JP)**

(74) Representative: **Gulde & Partner**
**Patent- und Rechtsanwaltskanzlei mbB**
**Wallstraße 58/59**
**10179 Berlin (DE)**

(54) **SOLID ELECTROLYTE, ELECTROCHEMICAL CELL COMPRISING SAME, AND METHOD FOR MANUFACTURING SOLID ELECTROLYTE**

(57) Disclosed herein are a solid electrolyte including a compound represented by Formula 1 below and having an argyrodite crystal structure, an electrochemical battery including the solid electrolyte, and a method of preparing the solid electrolyte.

<Formula 1> $(Li_{1-k}M_k)_{7-(a+b)}PS_{6-(a+b+x)}O_x$ ClaBrb

wherein, in Formula 1, M is sodium (Na), potassium (K), calcium (Ca), iron (Fe), magnesium (Mg), silver (Ag), copper (Cu), zirconium (Zr), zinc (Zn), or a combination thereof, and
$0.5 \leq a/b \leq 1.5$, $0<a<2$, $0<b<2$, $0<x \leq 1$, $0 \leq k< 1$, and $x<3-(a+b)/2$ are satisfied.

EP 4 117 071 A1

FIG. 2

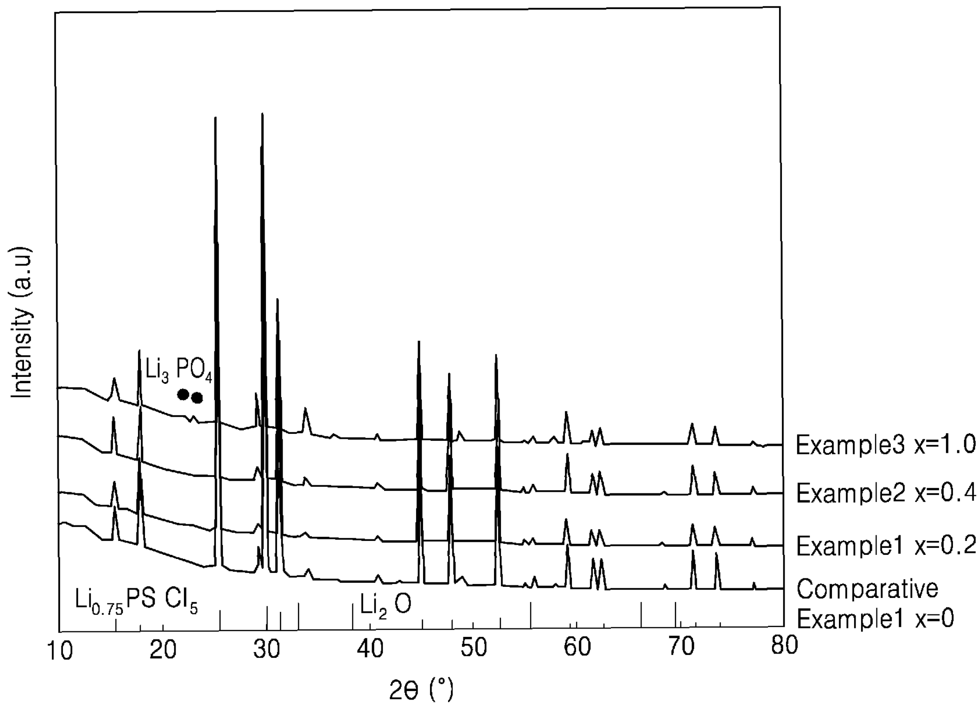
Intensity (a.u)
Li3 PO4
Li0.75PS Cl5
Li2 O
Example3 x=1.0
Example2 x=0.4
Example1 x=0.2
Comparative
Example1 x=0
10
20
30
40
50
60
70
80
2θ (°)

## Description

TECHNICAL FIELD

The present disclosure relates to a solid electrolyte, an electrochemical battery including the same, and a method of preparing a solid electrolyte.

BACKGROUND ART

Recently, due to industrial demands, development of batteries having high energy density and safety has been actively performed. For example, lithium ion batteries have been put to practical use in the field of automobiles as well as in the fields of information-related appliances and communication appliances.

Commercially available lithium ion batteries use an electrolyte solution containing an inflammable organic solvent, and therefore, there is a possibility of overheating and fire when a short circuit occurs. Therefore, all-solid batteries each using a solid electrolyte instead of an electrolyte have been proposed.

Since all-solid batteries do not use flammable organic solvents, the possibility of fire or explosion may be greatly reduced even in the event of a short circuit, thereby greatly improving safety as compared with lithium ion batteries each using an electrolyte.

A sulfide-based solid electrolyte is used as a solid electrolyte for an all-solid battery. However, the sulfide-based solid electrolyte does not reach the satisfactory level of oxidation resistance and ion conductivity without deterioration of ion conductivity, and thus improvements are required.

DESCRIPTION OF EMBODIMENTS

TECHNICAL PROBLEM

Provided are solid electrolytes having improved oxidation stability and ion conductivity.

Provided are electrochemical batteries having improved energy density and lifetime characteristics by containing the above-described solid electrolyte.

Provided are methods of preparing the solid electrolyte.

SOLUTION TO PROBLEM

According to an aspect of an embodiment, a solid electrolyte includes: a compound represented by Formula 1 and having an argyrodite crystal structure.

<Formula 1> $(Li_{1-k}M_k)_{7-(a+b)}PS_{6-(a+b+x)}O_x Cl_aBr_b$

in Formula 1, M is sodium (Na), potassium (K), calcium (Ca), iron (Fe), magnesium (Mg), silver (Ag), copper (Cu), zirconium (Zr), zinc (Zn), or a combination thereof, and

$0.5 \leq a/b \leq 1.5$, $0<a<2$, $0<b<2$, $0<x \leq 1$, $0 \leq k< 1$, and $x<3-(a+b)/2$ are satisfied.

According to an aspect of another embodiment, an electrochemical battery includes: a cathode layer; an anode layer; and a solid electrolyte layer between the cathode layer and the anode layer,

wherein at least one selected from the cathode layer, the anode layer, and the solid electrolyte layer includes the aforementioned solid electrolyte.

According to an aspect of another embodiment, a method of preparing a solid electrolyte includes: mixing a lithium (Li) precursor, a phosphorus (P) precursor, and a halogen atom (X) precursor to provide a precursor mixture; and reacting and heat-treating the precursor mixture, wherein the aforementioned solid electrolyte is prepared.

The heat treatment may be carried out at 250 °C to 700 °C.

ADVANTAGEOUS EFFECTS OF DISCLOSURE

According to an aspect of an embodiment, interface stability with a cathode is improved, and oxidation stability is improved, thereby providing a solid electrolyte having excellent ion conductivity. When using such a solid electrolyte, an electrochemical battery having improved energy density and lifetime characteristics may be manufactured.

BRIEF DESCRIPTION OF DRAWINGS

FIG. 1 is a graph illustrating the ion conductivity of solid electrolytes of Examples 1 to 8, Comparative Examples 1 and 2, and Reference Examples 1 to 10 at room temperature;
FIG. 2 is a graph illustrating the X-ray diffraction (XRD) analysis spectra of the oxides of Examples 1 to 3 and Comparative Example 1;
FIG. 3 is a graph illustrating the changes in capacity retention rates of the all-solid-state secondary batteries of Examples 9 to 11 and Comparative Example 5; and
FIGS. 4 to 6 are cross-sectional views of an all-solid-state secondary battery according to an embodiment.

<Explanation of Reference numerals>

| | | | | |
|---|---|---|---|---|
| [0025] | 1: | solid secondary battery | 10: | cathode layer |
| [0026] | 11: | cathode current collector | 12: | cathode active material layer |
| [0027] | 20: | anode layer | 21: | anode current collector |
| [0028] | 22: | anode active material layer | 30: | solid electrolyte |

DETAILED DESCRIPTION

Hereinafter, a solid electrolyte according to an embodiment, an electrochemical battery including the solid electrolyte, and a method of preparing the solid electrolyte will be described.

A solid electrolyte includes: a compound represented by Formula 1 and having an argyrodite crystal structure.

<Formula 1 > $(Li_{1-k}M_k)_{7-(a+b)}PS_{6-(a+b+x)}O_x\ Cl_aBr_b$

in Formula 1,M is sodium (Na), potassium (K), calcium (Ca), iron (Fe), magnesium (Mg), silver (Ag), copper (Cu), zirconium (Zr), zinc (Zn), or a combination thereof, and
$0.5 \le a/b \le 1.5$, $0<a<2$, $0<b<2$, $0<x \le 1$, $0 \le k<1$, and $x<3-(a+b)/2$ are satisfied.

In Formula 1, when a/b is out of the above range, ion conductivity deteriorates, which is not preferable. Further, when the compound does not satisfy the conditions of Formula 1, sulfur may remain. In this way, when sulfur remains, it reacts with moisture to generate toxic gas such as hydrogen sulfide, and thus problems about safety and stability may issue.

In Formula 1, $0<a \le 2$ and $0<b<2$ are satisfied. a is 0.1 to 1.5, 0.1 to 1, 0.2 to 1, 0.3 to 0.85, or 0.75 to 1. b is 0.1 to 0.9 or 0.7 to 0.75. In Formula 1, the total content (a+b)of chlorine and bromine is, for example, 0.1 to 4 or 1.5 to 1.7

In Formula 1, a/b is 0.6 to 1.45, 0.7 to 1.45, 0.8 to 1.45, 0.9 to 1.43, or 1 to 1.43. x is 0.2 to 1.0, 0.3 to 1.0, 0.4 to 1.0, or 0.5 to 1.0.

In order to increase the ion conductivity of a sulfide-based solid electrolyte having an arzyrodite crystal structure, it has been proposed to introduce oxygen (O) into sulfur (S). However, the oxidation stability of the sulfide-based solid electrolyte is improved, but the ion conductivity thereof is not sufficient. Therefore, it is necessary to improve the ion conductivity thereof.

Thus, in order to solve the aforementioned problem, the present inventors provide a solid electrolyte having improved ion conductivity and maintaining oxidation resistance by using a compound in which two kinds of halogen atoms, Cl and Br, are simultaneously introduced at a predetermined mixing ratio while replacing oxygen with sulfur such that the content of sulfur is controlled to be higher than to the content of oxygen.

The solid electrolyte according to an embodiment has an ion conductivity of 1mS/cm or more, 5mS/cm or more, 5.5mS/cm or more, 6mS/cm or more, 6.5mS/cm or more, 7mS/cm or more, 8mS/cm or more, 4.0mS/cm to 20 mS/cm, 4.0mS/cm to 15 mS/cm, or 4.0mS/cm to 10mS/cm at room temperature (25 °C). Since the solid electrolyte has a high ion conductivity of 1 mS/cm or more, this solid electrolyte may be used as an electrolyte of an electrochemical battery.

The compound of Formula 1 satisfies a condition of $x<3-(a+b)/2$ as described above. When the compound satisfies this condition, sulfur (S) may remain in the compound.

Further, the compound may satisfy $|2-(a+b+x)| \le 1$.

For example, in Formula 1, $|2-(a+b+x)| <1$ is satisfied. In the compound satisfying this condition,

phosphorus (P) remains, and thus lithium phosphate ($L_3PO_4$) may be produced. Lithium phosphate has low conductivity properties, and when the compound contains such lithium phosphate, the overall conductivity of the compound may be controlled. The phase of lithium phosphate in the compound may be found by X-ray diffraction analysis, and may be observed in a range of a diffraction angle 2θ of 22° to 25°.

The solid electrolyte has good stability to lithium metal, and the formation of a resistance layer due to an interface reaction between a cathode layer and an electrolyte is reduced, thereby exhibiting an interface stabilization effect. The solid electrolyte is stable at high voltage and reduces a side reaction in the interface reaction between the cathode layer and the electrolyte, thereby increasing discharge capacity and improving the lifetime and rate characteristics of an electrochemical battery.

The argyrodite-based solid electrolyte according to an embodiment includes, for example, a compound represented by Formula 2.

<Formula 2> $Li7\text{-}(a+b)PS6\text{-}(a+b+x)OxClaBr_b$

in Formula 2,$0.5 \leq a/b \leq 1.5$, $0<a<2$, $0<b<2$, $0<x \leq 1$, and $x<3-(a+b)/2$ are satisfied.

In Formula 2, $|2-(a+b+x)| \leq 1$ is satisfied.

The compound of Formula 1 is, for example, $Li_{5.3}PS_{4.3-x}O_xClBr_{0.7}(0<x \leq 1)$,

$Li_{5.5}PS_{4.5-x}O_xCl_{0.75}Br_{0.75}(0<x \leq 1)$, or a combination thereof. Here, x is 0.1 to 1.0, 0.2 to 0.8, or 0.3 to 0.6.

The compound of Formula 1 is a compound represented by Formula 4, a compound represented by Formula 5, a compound represented by Formula 6, or a combination thereof:

<Formula 3> $Li_{5.3}PS_{4.3-x}O_xClBr_{0.7}$

in Formula 3,$0<x \leq 1$ is satisfied.

<Formula 4> $Li_{5.5}PS_{4.5-x}O_xCl_{0.75}Br_{0.75}$

in Formula 4,$0<x \leq 1$ is satisfied,

<Formula 5> $Li_{5.5}PS_{4.5-x}O_xCl_{0.5}B$

in Formula 5,$0<x \leq 1$ is satisfied, and

<Formula 6> $Li_{5.3}PS_{4.3-x}O_xCl_{0.7}Br$

in Formula 6,$0<x \leq 1$ is satisfied.

The compound represented by Formula 1 and having an argyrodite crystal structure is, for example, $Li_{5.5}PS_{4.3}O_{0.2}Cl_{0.75}Br_{0.75}$, $Li_{5.5}PS_{4.1}O_{0.4}Cl_{0.75}Br_{0.75}$, $Li_{5.5}PS_{3.5}O_{1.0}Cl_{0.75}Br_{0.75}$, $Li_{5.3}PS_{4.2}O_{0.1}ClBr_{0.7}$, $Li_{5.3}PS_{4.1}O_{0.2}ClBr_{0.7}$, $Li_{5.3}PS_{4.0}O_{0.3}ClBr_{0.7}$, $Li_{5.3}PS_{3.9}O_{0.4}ClBr_{0.7}$, $Li_{5.3}PS_{3.8}O_{0.5}ClBr_{0.7}$, $Li_{5.5}PS_{4.3}O_{0.2}Cl_{0.5}Br$, $Li_{5.5}PS_{4.1}O_{0.4}Cl_{0.5}Br$, $Li_{5.5}PS_{3.5}O_{1.0}Cl_{0.5}Br$, $Li_{5.3}PS_{4.2}O_{0.1}Cb_{0.7}Br$, $Li_{5.3}PS_{4.1}O_{0.2}Cb_{0.7}Br$, $Li_{5.3}PS_{4.0}O_{0.3}Cl_{0.7}Br$, $Li_{5.3}PS_{3.9}O_{0.4}Cl_{0.7}B$, $Li_{5.3}PS_{3.8}O_{0.5}Cl_{0.7}Br$, or a combination thereof.

The solid electrolyte according to an embodiment may be used as an electrolyte for an all-solid battery and/or an electrolyte for a cathode layer. The solid electrolyte may be used as an anode layer and/or electrolyte in a lithium-sulfur battery.

The solid electrolyte according to an embodiment may be used as an electrolyte of a cathode, and may be used as a protective film of an anode layer for a lithium metal battery.

An electrochemical cell according to another embodiment includes: a cathode layer; an anode layer; and a solid electrolyte layer between the cathode layer and the anode layer, wherein the solid electrolyte includes the aforementioned electrolyte. Since the solid electrolyte layer includes the aforementioned solid electrolyte according to an embodiment, the interfacial properties with the cathode are improved to improve oxidation resistance. As a result, the electrochemical cell has a capacity retention rate of 90 % or more, for example, 90 % to 98 % after left at 45 °C for 50 hours under a condition of 4 V or more. The conditions for measuring the capacity retention rate after left at high temperature are as described in Evaluation Example 3 to be described later. For example, the capacity retention rate refers to a capacity retention rate when an initial primary charge and discharge cycles were carried out, the electrochemical battery was charged with constant current (CC) / constant voltage (CV) at 4.25V, the electrochemical battery was left at 45 °C for 50 hours, and then electrochemical battery was charged with constant current (CC) at 2.5V.

In the electrochemical battery according to an embodiment, side reactions with lithium metal contained in the anode layer are suppressed, thereby improving cycle characteristics of the electrochemical battery.

The electrochemical battery may be, for example, an all-solid-state secondary battery or a lithium-air battery, but is not limited thereto. Any electrochemical battery may be used as long as it may be used in the art.

In the electrochemical battery according to an embodiment, the cathode layer includes a solid electrolyte containing a compound represented by Formula 1 and having an argyrodite crystal structure.

<Formula 1 > $(Li_{1-k}M_k)_{7-(a+b)}PS_{6-(a+b+x)}O_x$ ClaBrb

in Formula 1,M is sodium (Na), potassium (K), calcium (Ca), iron (Fe), magnesium (Mg), silver (Ag), copper (Cu), zirconium (Zr), zinc (Zn), or a combination thereof, and $0.5 \leq a/b \leq 1.5$, $0<a<2$, $0<b<2$, $0<x\leq 1$, $0\leq k<1$, and $x<3-(a+b)/2$ are satisfied.

In Formula 1, for example, $x<3-(a+b)/2$ may be satisfied.

The content of the solid electrolyte in the cathode layer is 2 parts by weight to 70 parts by weight, for example 3 parts by weight to 70 parts by weight, for example 3parts by weight to 60 parts by weight, for example 10parts by weight to 60 parts by weight, based on 100 parts by weight of a cathode active material. When the content of the solid electrolyte in the cathode layer is within the above range, the high voltage stability of the electrochemical battery is improved.

Hereinafter, an all-solid-state secondary battery will be described in more detail as an example of the electrochemical battery according to an embodiment.

Referring to FIGS. 4 to 6, an all-solid-state secondary battery 1 includes: an anode layer 20 including an anode current collector 21 and a first anode active material layer 22; a cathode layer 10 including a cathode active material layer 12; and a solid electrolyte layer 30 disposed between the anode layer 20 and the cathode layer 10. The cathode layer 10 may contain a solid electrolyte according to an embodiment. The cathode layer 10 contains, for example, a cathode active material, a solid electrolyte, and a conducting agent.

(Anode layer)

Referring to FIGS. 4 to 6, the anode layer includes an anode current collector 21 and a first anode active material layer 22, and the first anode active material layer 22 includes an anode active material.

The anode active material included in the first anode active material layer 22 has, for example, a particle form. The average particle diameter of the anode active material having a particle form is, for example, 4 μm or less, 3 μm or less, 2 μm or less, 1 μm or less, or 900 nm or less. The average particle diameter of the anode active material having a particle form is, for example, 10 nm to 4μm, 10 nm to 3 μm, 10 nm to 2 μm, 10 nm to 1 μm, or 10 nm to 900 nm. When the average particle diameter of the anode active material is within the above range, reversible absorbing and/or desorbing of lithium during charging and discharging may be easier. The average particle diameter of the anode active material is, for example, a median diameter (D50) measured using a laser-type particle size distribution meter.

The anode active material included in the first anode active material layer 22 includes at least one selected from a carbon-based anode active material and a metal or metalloid anode active material.

The carbon-based anode active material is amorphous carbon. Examples of amorphous carbon may include, but are not limited to, carbon black (CB), acetylene black (AB), furnace black (FB), ketjen black (KB), and graphene. Any amorphous carbon may be used as long as it is classified as amorphous carbon in the art. Amorphous carbon is carbon not having crystallinity or having very low crystallinity, and is distinguished from crystalline carbon or graphite-based carbon.

The metal or metalloid anode active material includes, but is not limited to, at least one selected from gold (Au), platinum (Pt), palladium (Pd), silicon (Si), silver (Ag), aluminum (Al), bismuth (Bi), tin (Sn), and zinc (Zn). Any metal or metalloid anode active material may be used as long as it is used as a metal anode active material or a metalloid anode active material which forms an alloy or compound with lithium in the art. For example, nickel (Ni) is not a metal anode active material because it does not form an alloy with lithium.

The first anode active material layer 22 includes a kind of anode active material among these anode active materials, or includes a mixture of a plurality of different anode active materials. For example, the first anode active material layer 22 includes only amorphous carbon, or includes at least one selected from gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from gold (Au), platinum (Pt), palladium (Pd), silicon (Si), silver (Ag), aluminum (Al), bismuth (Bi), tin (Sn), and zinc (Zn). The mixing ratio of amorphous carbon and gold or the like in the mixture is, for example, 10:1 to 1:2, 5:1 to 1:1, or 4:1 to 2:1 by weight, but is not limited thereto. The mixing ratio thereof is selected according to the required characteristics of the all-solid-state secondary battery 1. When the anode active material has such a composition, the cycle characteristics of the all-solid-state secondary battery 1 are further improved.

The anode active material included in the first anode active material layer 22 includes, for example, a mixture of first particles made of amorphous carbon and second particles made of metal or metalloid. Examples of metal or metalloid include gold (Au), platinum (Pt), palladium (Pd), silicon (Si), silver (Ag), aluminum (Al), bismuth (Bi), tin (Sn), and zinc (Zn). The metalloid is otherwise a semiconductor. The content of the second particles is 8% by weight to 60% by weight, 10% by weight to 50% by weight, 15% by weight to 40% by weight, or 20% by weight to 30% by weight, based on the total weight of the mixture. When the content of the second particles is within the above range, for example, the cycle characteristics of the all-solid-state secondary battery 1 are further improved.

The first anode active material layer 22 includes, for example, a binder. Examples of the binder include, but are not limited to, styrene-butadiene rubber (SBR), polytetrafluoroethylene (PTFE), polyvinylidene fluoride (PVDF), polyethylene,vinylidene fluoride / hexafluoropropylene copolymer, polyacrylonitrile, and polymethyl methacrylate. Any binder may be used as long as it is used as a binder in the art. The binder may be used alone or in combination of different binders.

When the first anode active material layer 22 includes the binder, the first anode active material layer 22 is stabilized on the anode current collector 21. Further, in the process of charging and discharging, cracks of the first anode active material layer 22 are suppressed despite a volume change and/or a relative position change of the first anode active material layer 22. For example, when the first anode active material layer 22 does not include the binder, the first anode active material layer 22 may be easily separated from the anode current collector 21. The portion where the first negative electrode active material layer 22 is separated from the negative electrode current collector 21 is exposed by the negative electrode current collector 21 to contact the solid electrolyte layer 30, and thus the possibility of occurrence of a short may increase. The first anode active material layer 22 is produced, for example, by applying a slurry in which materials constituting the first anode active material layer 22 are dispersed on the anode current collector 21 and drying the slurry. When the binder is included in the first anode active material layer 22, an anode active material may be stably dispersed in the slurry. For example, when the slurry is applied on the anode current collector 21 by a screen printing method, it is possible to prevent the clogging of a screen (for example, clogging of the anode active material by aggregates).

The thickness d22 of the first anode active material layer is, for example, 50% or less, 40% or less, 30% or less, 20% or less, 10% or less, or 5% or less of the thickness d12 of the cathode active material layer. The thickness d22 of the first anode active material layer is, for example, 1 $\mu$m to 20 $\mu$m, 2 $\mu$m to 10 $\mu$m, or 3 $\mu$m to 7 $\mu$m. When the thickness d22 of the first anode active material layer is too thin, lithium dendrite formed between the first anode active material layer 22 and the anode current collector 21 collapses the first anode active material layer 22, so that it is difficult to improve the cycle characteristics of the all-solid-state secondary battery 1. When the thickness d22 of the first anode active material layer too increases, the energy density of the all-solid-state secondary battery 1 decreases, and the internal resistance of the all-solid-state secondary battery 1 due to the first anode active material layer 22 increases, so that it is difficult to improve the cycle characteristics of the all-solid-state secondary battery 1.

When the thickness d22 of the first anode active material layer decreases, for example, the charging capacity of the first anode active material layer 22 also decreases. The charging capacity of the first anode active material layer 22 is, for example, 50% or less, 40% or less, 30% or less, 20% or less, 10% or less, 5% or less, or 2% or less of the charging capacity of the cathode active material layer 12. The charging capacity of the first anode active material layer 22 is, for example, 0.1% to 50%, 0.1% to 40%, 0.1% to 30%, 0.1% to 20%, 0.1% to 10%, 0.1% to 5%, or 0.1% to 2%of the charging capacity of the cathode active material layer 12. When the charging capacity of the first anode active material layer 22 is too small, the first anode active material layer 22 becomes very thin. Therefore, in the process of repeatedly charging and discharging, lithium dendrite formed between the first anode active material layer 22 and the anode current collector 21 collapses the first anode active material layer 22, so that it is difficult to improve the cycle characteristics of the all-solid-state secondary battery 1. When the charging capacity of the first anode active material layer 22 too increases, , the energy density of the all-solid-state secondary battery 1 decreases, and the internal resistance of the all-solid-state secondary battery 1 due to the first anode active material layer 22 increases, so that it is difficult to improve the cycle characteristics of the all-solid-state secondary battery 1.

The charging capacity of the cathode active material layer 12 is obtained by multiplying the charging capacity density (mAh/g) of the cathode active material by the mass of the cathode active material in the cathode active material layer 12. When several types of cathode active materials are used, values of charging capacity density X mass are calculated for each cathode active material, and the total of these values is the charging capacity of the cathode active material layer 12. The charging capacity of the first anode active material layer 22 is also calculated in the same manner. That is, the charging capacity of the anode active material layer 22 is obtained by multiplying the charging capacity density (mAh/g) of the anode active material by the mass of the anode active material in the anode active material layer 22. When several types of anode active materials are used, values of charging capacity density X mass are calculated for each anode active material, and the total of these values is the charging capacity of the anode active material layer 22. Here, the charging capacity density of each of the cathode active material and the anode active material refers to a charging capacity estimated by using all-solid half-cell using lithium metal as a counter electrode. The charging capacities of the cathode active material layer 12 and the first anode active material layer 22 are directly measured by measuring the charging capacity using an all-solid half-cell. When the measured charging capacity is divided by the mass of each of the active materials, the charging capacity density is obtained. Alternatively, the charging capacity of each of the cathode active material layer 12 and the first anode active material layer 22 may be an initial charging capacity measured at the first cycle charging.

The anode current collector 21 is made of, for example, a material that does not react with lithium, that is, does not form both an alloy and a compound. Examples of the material constituting the anode current collector 21 include, but are not limited to, copper (Cu), stainless steel, titanium (Ti), iron (Fe), cobalt (Co), and nickel (Ni). Any material may be used as long as it is used to constitute an electrode current collector in the art. The anode current collector 21 may be made of one of the above-described metals, or may be made of an alloy or coating material of two or more metals thereof. The anode current collector 21 is formed in the shape of a plate or a foil.

The first anode active material layer 22 may further include additives used in the conventional all-solid-state secondary battery 1, for example, a fillers, a dispersant, and an ion conducting agent.

Referring to FIG. 5, the all-solid-state secondary battery 1 further includes a thin film 24 including an element capable of forming an alloy with lithium on the anode current collector 21. The thin film 24 is disposed between the anode current collector 21 and the first anode active material layer 22. The thin film 24 includes, for example, an element capable of forming an alloy with lithium. Examples of the element capable of forming an alloy with lithium include, but are not limited to, gold, silver, zinc, tin, indium, silicon, aluminum, and bismuth. Any element may be used as long as it is capable of forming an alloy with lithium in the art. The thin film 24 is made of one of these metals, or an alloy of various types of metals. When the thin film 24 is disposed on the anode current collector 21, for example, the precipitation form of the second anode active material layer (not shown) precipitated between the thin film 24 and the first anode active material layer 22 may be further flattened, and the cycle characteristics of the all-solid-state secondary battery 1 may be further improved.

The thickness d24 of the thin film 24 is, for example, 1 nm to 800 nm, 10 nm to 700 nm, 50 nm to 600 nm, or 100 nm to 500 nm. When the thickness d24 of the thin film 24 is less than 1 nm, the function by the thin film 24 may be difficult to exert. When the thin film 24 is too thick, the thin film 24 itself absorbs lithium, and thus the amount of lithium deposited in the anode layer decreases, thereby reducing the energy density of the all-solid battery 1 and deteriorating the cycle characteristics of the all-solid-state secondary battery 1. The thin film 24 may be disposed on the anode current collector 21 by, for example, a vacuum deposition method, a sputtering method, a plating method, or the like, but the method is not necessarily limited thereto. Any method may be used as long as it is a method capable of forming the thin film 24 in the art.

Referring to FIG. 6, the all-solid-state secondary battery 1 further includes, for example, a second anode active material layer 23 disposed between the anode current collector 21 and the solid electrolyte layer 30 by charging. The all-solid-state secondary battery 1 further includes a second anode active material layer 23 disposed between the anode current collector 21 and the first anode active material layer 22 by charging. Although not shown in the drawing, the all-solid-state secondary battery 1 further includes, for example, a second anode active material layer 23 disposed between the solid electrolyte layer 30 and the first anode active material layer 22 by charging. Although not shown in the drawing, the all-solid-state secondary battery 1 further includes, for example, a second anode active material layer 23 disposed inside the first anode active material layer 22 by charging.

The second anode active material layer 23 is a metal layer including lithium or a lithium alloy. The metal layer includes lithium or a lithium alloy. Therefore, since the second anode active material layer 23 is a metal layer containing lithium, it acts as, for example, a lithium reservoir. Examples of the lithium alloy include, but are not limited to, a Li-Al alloy, a Li-Sn alloy, a Li-In alloy, a Li-Ag alloy, a Li-Au alloy, a Li-Zn alloy, a Li-Ge alloy, and a Li-Si alloy. Any lithium alloy may be used as long as it is used in the art. The second anode active material layer 23 may be made of one of these alloys or lithium, or made of several types of alloys.

The thickness d23 of the second anode active material layer is not particularly limited, but for example, 1 μm to 1000 μm, 1 μm to 500 μm, 1 μm to 200 μm, 1 μm to 150 μm , 1 μm to 100 μm , or 1 μm to 50 μm. When the thickness d23 of the second anode active material layer is too thin, it is difficult to perform the role of a lithium reservoir by the second anode active material layer 23. When the thickness d23 of the second anode active material layer is too thick, there is a possibility that the mass and volume of the all-solid-state secondary battery 1 increase and the cycle characteristics thereof decrease. The second anode active material layer 23 may be, for example, a metal foil having a thickness in this range.

In the all-solid-state secondary battery 1, the second anode active material layer 23 is disposed between the anode current collector 21 and the first anode active material layer 22 before assembly of the all-solid-state secondary battery 1, or is disposed between the anode current collector 21 and the first anode active material layer 22 by charging after assembly of the all-solid-state secondary battery 1.

When the second anode active material layer 23 is disposed between the anode current collector 21 and the first anode active material layer 22 before assembly of the all-solid-state secondary battery 1, the second anode active material layer 23 acts as a lithium reservoir because it is a metal layer including lithium. The cycle characteristics of the all-solid-state secondary battery 1 including the second anode active material layer 23 are further improved. For example, a lithium foil is disposed between the negative electrode current collector 21 and the first negative electrode active material layer 22 before assembly of the all-solid-state secondary battery 1.

When the second anode active material layer 23 is disposed by charging after assembly of the all-solid-state secondary battery 1, the energy density of the all-solid-state secondary battery 1 increases because the second anode active material layer 23 is not provided at the time of assembling the all-solid-state secondary battery 1. For example, when charging the all-solid-state secondary battery 1, the first anode active material layer 22 is charged to exceed the charging capacity of the first anode active material layer 22. That is, the first anode active material layer 22 is overcharged. At the initial stage of charging, lithium is absorbed in the first anode active material layer 22. That is, the anode active material included in the first anode active material layer 22 forms an alloy or compound with lithium ions transferred from the cathode layer 10. When the first anode active material layer 22 is charged to exceed the charging capacity of the first anode active material layer 22, for example, lithium is precipitated on the rear surface of the first anode active material layer 22, that is, between the anode current collector 21 and the first anode active material layer 22, and a metal layer corresponding to the second anode active material layer 23 is formed by the precipitated lithium. The second anode active material layer 23 is a metal layer mainly including lithium (that is, metal lithium). This result is obtained, for example, by forming the anode active material included in the first anode active material layer 22 as a material forming an alloy or compound with lithium. During discharge, lithium of the first anode active material layer 22 and the second anode active material layer 23, that is, the metal layer is ionized and moved in the direction of the cathode layer 10. Therefore, in the all-solid-state secondary battery 1, it is possible to use lithium as the anode active material. Further, since the first anode active material layer 22 covers the second anode active material layer 23, the first anode active material layer 22 serves as a protective layer of the second anode active material layer 23, that is, a metal layer, and simultaneously, serves to suppress the precipitation growth of lithium dendrite. Therefore, the short circuit and capacity reduction of the all-solid-state secondary battery 1 are suppressed, and as a result, the cycle characteristics of the all-solid-state secondary battery 1 are improved. Further, when the second anode active material layer 23 is disposed by charging after assembly of the all-solid-state secondary battery 1, the area between the anode current collector 21 and the first anode active material layer 22 is a Li-free area that do not include a lithium (Li) metal or a lithium (Li) alloy in an initial state of the all-solid-state secondary battery or after the discharge of the all-solid-state secondary battery.

The all-solid-state secondary battery 1 has a structure in which the second anode active material layer 23 is disposed on the cathode current collector 21 and the solid electrolyte layer 30 is directly disposed on the second anode active material layer 23. The second anode active material layer 23 is, for example, a lithium metal layer or a lithium alloy layer.

When the solid electrolyte layer 30 includes a solid electrolyte according to an embodiment, the side reaction of the second anode active material layer 23, which is a lithium metal layer, and the solid electrolyte layer 30 is suppressed, so that the cycle characteristics of the all-solid-state secondary battery 1 may be improved.

(Solid electrolyte layer)

Referring to FIGS. 4 to 6, the solid electrolyte layer 30 includes a solid electrolyte disposed between a cathode layer 10 and an anode layer 20.

The solid electrolyte may further include a conventional general sulfide-based solid electrolyte in addition to the solid electrolyte according to an embodiment. The solid electrolyte further includes a sulfide-base solid electrolyte such as$Li_2S$-$P_2S_5$, Li2S-P2S5-LiX (X is a halogen element), $Li_2S$-$P_2S_5$-$Li_2O$, $Li_2S$-$P_2S_5$-$Li_2O$-LiI, Li2S-SiS2, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are each a positive number, Zn is one of Ge, Zn, and Ga), $Li_2S$-$GeS_2$, $Li_2S$-$SiS_2$-$Li_3PO_4$, or $Li_2S$-$SiS_2$-$Li_pMO_q$ (p and q are each a positive number, and M is at least one selected from P, Si, Ge, B, Al, Ga, and In) The sulfide-based solid electrolyte is amorphous, crystalline, or a mixed state thereof.

The general sulfide-based solid electrolyte may further include, for example, an Argyrodite type solid electrolyte represented by Formula 7 below.

<Formula 7> $Li^{+}{}_{12-n-x}A^{n+}X^{2-}{}_{6-x}Y^{-}x$

in Formula 7, A is P, As, Ge, Ga, Sb, Si, Sn, Al, In, Ti, V, Nb, or Ta, X is S, Se, or Te, Y is Cl, Br, I, F, CN, OCN, SCN, or $N_3$, and 0 <x <2 is satisfied.

The argyrodite type solid electrolyte includes at least one selected from $Li_{7-x}PS_{6-x}Cl_x$ (0<x<2), Li7-xPS6-xBrx (0<x<2), and Li7-xPS6-xIx (0<x<2). Particularly, the argyrodite type solid electrolyte includes at least one selected from $Li_6PS_5Cl$, $Li_6PS_5Br$, and $Li_6PS_5I$.

The solid electrolyte layer 30 further includes, for example, a binder. The binder included in the solid electrolyte layer 30 is, for example, styrene butadiene rubber (SBR), polytetrafluoroethylene, polyvinylidene fluoride, polyethylene, or the like, but is limited thereto. Any binder may be used as long as it is used as a binder in the art. The binder of the solid electrolyte layer 30 may be the same as or different from the binder of the cathode active material layer 12 or the anode active material layer 22.

(Cathode layer)

The cathode layer 10 includes a cathode current collector 11 and a cathode active material layer 12.

As the cathode current collector 11, a plate or foil including indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted.

The cathode active material layer 12 includes, for example, a cathode active material and a solid electrolyte. The solid electrolyte included in the cathode layer 10 is similar to or different from the solid electrolyte included in the solid electrolyte layer 30. For details of the solid electrolyte, refer to the solid electrolyte layer 30. According to an embodiment, the solid electrolyte includes a solid electrolyte according to an embodiment.

The cathode layer contains a cathode active material, and the cathode active material is a compound capable of reversibly absorbing and desorbing lithium ions. The compound includes at least one selected from lithium transition metal oxide having a layered crystal structure, lithium transition metal oxide having an olivine crystal structure, and lithium transition metal oxide having a spinel crystal structure. Examples of the cathode active material include, but are not limited to, lithium transition metal oxides such as lithium cobalt oxide (LCO), lithium nickel oxide, lithium nickel cobalt oxide, lithium nickel cobalt oxide (NCA), lithium nickel cobalt manganese oxide (NCM), lithium manganate, and lithium iron phosphate; nickel sulfide; copper sulfide; lithium sulfide; iron oxide; and vanadium oxide. Any cathode active material may be used as long as it is used in the art. The cathode active materials are used alone or as a mixture of two or more thereof.

As the lithium transition metal oxide, for example, a compound represented by any one of Formulae of $Li_aA_{1-b}B_bD_2$ (where, $0.90 \leq a \leq 1$ and $0 \leq b \leq 0.5$ are satisfied); $LiaE_{1-b}B_bO_{2-c}D_c$ (where, $0.90 \leq a \leq 1$, $0 \leq b \leq 0.5$, and $0 \leq c < 0.05$ are satisfied); $LiE_{2-b}B_bO_{4-c}D_c$ (where, $0 \leq b \leq 0.5$ and $0 \leq c \leq 0.05$ are satisfied); $LiaNi_{1-b-c}Co_bB_cD_\alpha$ (where, $0.90 \leq a \leq 1$, $0 \leq b \leq 0.5$, $0 \leq c \leq 0.05$, and $0 < \alpha \leq 2$ are satisfied); $LiaNi_{1-b-c}Co_bB_cO_{2-a}F_\alpha$ (where, $0.90 \leq a \leq 1$, $0 \leq b \leq 0.5$, $0 \leq c \leq 0.05$, and $0 < \alpha < 2$ are satisfied); $LiaNi_{1-b-c}Co_bB_cO_{2-a}F_2$ (where, $0.90 \leq a \leq 1$, $0 \leq b \leq 0.5$, $0 \leq c \leq 0.05$, and $0 < \alpha < 2$ are satisfied); $LiaNi_{1-b-c}Mn_bB_cD_\alpha$ (where, $0.90 \leq a \leq 1$, $0 \leq b \leq 0.5$, $0 \leq c \leq 0.05$, and $0 < \alpha \leq 2$ are satisfied); $LiaNi_{1-b-c}Mn_bB_cO_{2-\alpha}F_\alpha$ (where, $0.90 \leq a \leq 1$, $0 \leq b \leq 0.5$, $0 \leq c \leq 0.05$, and $0 < \alpha < 2$ are satisfied); $LiaNi_{1-b-c}Mn_bB_cO_{2-\alpha}F_2$ (where, $0.90 \leq a \leq 1$, $0 \leq b \leq 0.5$, $0 \leq c \leq 0.05$, and $0 < \alpha < 2$ are satisfied); $LiaNi_bE_cG_cO_2$ (where, $0.90 \leq a \leq 1$, $0 \leq b \leq 0.9$, $0 \leq c \leq 0.5$, and $0.001 \leq d \leq 0.1$ are satisfied); $Li_aNi_bCo_cMn_cGeO_2$(where, $0.90 \leq a \leq 1$, $0 \leq b \leq 0.9$, $0 \leq c \leq 0.5$, $0 \leq d \leq 0.5$, and $0.001 \leq e \leq 0.1$ are satisfied);$Li_aNiG_bO_2$ (where, $0.90 \leq a \leq 1$ and $0.001 \leq b \leq 0.1$ are satisfied); $Li_aCoG_bO_2$ (where, $0.90 \leq a \leq 1$ and $0.001 \leq b \leq 0.1$ are satisfied);$Li_aMnG_bO_2$ (where, $0.90 \leq a \leq 1$ and $0.001 \leq b \leq 0.1$ are satisfied);$Li_aMn_2G_bO_4$ (where, $0.90 \leq a \leq 1$ and $0.001 \leq b \leq 0.1$ are satisfied);$QO_2$; $QS_2$; LiQS2; $V_2O_5$; $LiV_2O_5$; $LiIO_2$; $LiNiVO_4$; $Li_{(3-f)}J_2(PO_4)_3(0 \leq f \leq 2)$; $Li_{(3-0)}Fe_2(PO_4)_3(0 \leq f \leq 2)$; and $LiFePO_4$ may be used. In this compound, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; $F^1$ is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. In one or more embodiments, a compound having a coating layer on the surface of the compound may be used, or a mixture of the compound and a compound having a coating layer may be used. The coating layer formed on the surface of the compound may include a coating element compound of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. As the coating element included in the coating layer, Mg, Al, Co, K, Na, Ca, Si, Ti, V, Sn, Ge, Ga, B, As, Zr, or a mixture thereof may be used. The method of forming the coating layer is selected within the range that does not adversely influence the physical properties of the cathode active material. The coating method is, for example, spray coating or dipping. Since the detailed coating method is well understood by those skilled in the art, a detailed description thereof will be omitted.

The positive electrode active material includes a lithium salt of a transition metal oxide having a layered rock salt type structure among the aforementioned lithium transition metal oxides. The " layered rock salt type structure" refers to a structure in which oxygen atom layers and metal atom layers are alternately and regularly arranged in the <111> direction of a cubic rock salt type structure and thus each of the atom layers forms a two-dimensional plane. The "cubic rock salt type structure" refers to a sodium chloride (NaCl) type structure, which is a kind of crystal structure, and more specifically, in which face centered cubic lattices (FCCs), which form cations and anions, respectively, are arranged having the number of unit lattice offset by one-half of the ridge of the unit lattice. The lithium transition metal oxide having such layered rock salt structure is a ternary lithium transition metal oxide such as $LiNi_xCo_yAlzO_2$ (NCA) or $LiNi_xCo_yMn_zO_2$ (NCM) ($0 < x < 1$, $0 < y < 1$, $0 < z < 1$, $x + y + z = 1$). When the cathode active material includes a ternary lithium transition metal oxide having the layered rock salt structure, the energy density and thermal stability of the all-solid-state secondary battery 1 are further improved.

The cathode active material may be covered by the coating layer as described above. The coating layer may be any of the known coating layer of the cathode active material of the all-solid-state secondary battery. The coating layer is, for example, $Li_2O$-$ZrO_2$ (LZO) and the like.

When the cathode active material contains nickel (Ni) as the ternary lithium transition metal oxide such as NCA or NCM, the capacity density of the all-solid-state secondary battery 1 is increased, thereby reducing the metal dissolution of the cathode active material in the charged state. As a result, the cycle characteristic of the all-solid-state secondary battery 1 in the charged state is improved.

The shape of the cathode active material is a particle shape such as a true sphere or an elliptic sphere. The particle diameter of the cathode active material is not particularly limited, and is in a range applicable to the cathode active material of the conventional all-solid-state secondary battery. The content of the cathode active material of the cathode layer 10 is also not particularly limited, and is in a range applicable to the cathode layer of the conventional all-solid-state secondary battery.

The cathode layer 10 may further include additives such as a conductive material, a binder, a filler, a dispersant, and an ion conductive assistant, in addition to the aforementioned cathode active material and solid electrolyte. Examples of the conductive material include graphite, carbon black, acetylene black, Ketjen black, carbon fiber, and metal powder. Examples of the binder include styrene butadiene rubber (SBR), polytetrafluoroethylene, polyvinylidene fluoride, and polyethylene. The filler, the coating agent, the dispersant, the ion conductive aid, etc. which may be included in the cathode active material layer, may be used as known materials conventionally used for an electrode of the all-solid-state secondary battery.

Hereinafter, a method of preparing a solid electrolyte according to an embodiment will be described.

A method of preparing a solid electrolyte according to an embodiment includes: mixing a lithium (Li) precursor, a phosphorus (P) precursor, and a halogen atom (X) precursor to provide a precursor mixture; and reacting the precursor mixture to obtain a solid electrolyte precursor and heat-treating the solid electrolyte precursor.

X of the halogen atom precursor is chlorine (Cl), bromine (Br), or a combination thereof.

The lithium precursor may be, for example, $Li_2S$. Examples of the phosphorus precursor may include $P_2S_5$, red phosphorous, white phosphorous, phosphorus powder, $P_2O_5$, (NH4)2HP04, (NH4)H2P04, Na2HP04, and Na3P04.

The X precursor is, for example, a lithium halide such as LiC or LiBr.

An M precursor may be further added to the precursor mixture. In the M precursor, M is sodium (Na), potassium (K), iron (Fe), magnesium (Mg), calcium (Ca), silver (Ag), copper (Cu), zirconium (Zr), zinc (Zn), or a combination thereof.

The contents of the above-described lithium precursor, phosphorus precursor, halogen atom precursor, and M precursor may be stoichiometrically controlled according to the composition of a target material.

In the reaction of the precursor mixture, for example, the mixture is reacted to obtain a solid electrolyte precursor, and the solid electrolyte precursor is heat-treated at a temperature ranging from 250 °C to 700 °C.

The heat treatment temperature is, for example, in a range of 300 °C to 700 °C, 400 °C to 650 °C, 400 °C to 600 °C, 400 °C to 550 °C, or 400 °C to 520 °C. When the heat treatment is carried out within the above temperature range, a solid electrolyte having an arzyronite crystal structure may be obtained.

The method of reacting the precursor mixture is not particularly limited, but an example thereof includes mechanical milling (MM). For example, when mechanical milling is used, the solid electrolyte precursor is prepared by stirring and reacting starting materials such as $Li_2S$ and $P_2S_5$ using a ball mill or the like. Although the stirring speed and stirring time of mechanical milling are not particularly limited, the faster the stirring speed, the faster the production rate of the solid electrolyte precursor, and the longer the stirring time, the higher the conversion rate of the raw material into the solid electrolyte precursor.

Subsequently, the solid electrolyte precursor obtained by mechanical milling is heat-treated at predetermined temperature, and then pulverized to prepare a particulate solid electrolyte. When the solid electrolyte has glass transition characteristics, the solid electrolyte may be changed from amorphous to crystalline. The heat treatment temperature is, for example, about 400 °C to about 600 °C. Due to this heat treatment temperature, a solid electrolyte having a uniform composition is easily obtained.

The heat treatment time is changed depending on the heat treatment temperature, for example 1 to 100 hours, 10 to 80 hours, 20 to 28 hours, or 24 hours. The solid electrolyte obtained by the heat treatment time within the above range has both excellent ionic conductivity and high-temperature stability.

The heat treatment atmosphere is an inert atmosphere. Gas used in the heat treatment atmosphere is not limited to nitrogen, argon, and the like, but any gas may be used as long as it is used in an inert atmosphere in the art.

A method of manufacturing an all-solid-state secondary battery according to another embodiment includes: preparing a solid electrolyte using the aforementioned method; forming a cathode layer 10, an anode layer 20 and/or a solid electrolyte layer 30 using the solid electrolyte; and laminating these layers.

The solid electrolyte layer 30 has a thickness of about 10 μm to about 200 μm, about 10 μm to about 100 μm , about 15 μm to about 90 μm , or about 15 μm to about 80 μm. When the thickness of the solid electrolyte is within the above range, the effect of improving the high-rate and lifetime characteristics of the all-solid-state secondary battery is excellent.

(Preparation of anode layer)

An anode active material, a conductive material, a binder, and a solid electrolyte, which are materials constituting a first anode active material layer 22, are added to a polar solvent or a nonpolar solvent to prepare a slurry. The prepared slurry is applied onto an anode current collector 21 and dried to prepare a first laminate. Subsequently, the first laminate is pressed to prepare an anode layer 20. The pressing may be, but is not necessarily limited to, roll pressing, flat pressing, or hot pressing. Any pressing may be used as long as it is used in the art. The pressing process may be omitted.

The anode layer includes a anode current collector and a first anode active material layer including an anode active material and disposed on the anode current collector. The anode active material includes at least one selected from a carbon-based anode active material and a metal or metalloid anode active material, and the carbon-based anode active material includes at least one selected from amorphous carbon and crystalline carbon. The metal or metalloid anode active material includes at least one selected from gold (Au), platinum (Pt), palladium (Pd), silicon (Si), silver (Ag), aluminum (Al), bismuth (Bi), tin (Sn), and zinc (Zn).

The anode layer further include a second anode active material layer disposed between the anode current collector and the first anode active material layer and/or between the solid electrolyte layer and the first anode active material layer, and the second anode active material layer is a metal layer including lithium or a lithium alloy.

(Preparation of cathode layer)

A cathode active material, a conductive material, a binder, and a solid electrolyte, which are materials constituting a cathode active material layer 12, are added to a nonpolar solvent to prepare a slurry. The prepared slurry is applied onto a cathode current collector 11 and dried to obtain a laminate. The obtained laminate is pressed to prepare a cathode layer 10. The pressing may be, but is not necessarily limited to, roll pressing, flat pressing, or hot pressing. Any pressing may be used as long as it is used in the art. The pressing process may be omitted. Alternatively, the cathode layer 10 is prepared by compacting a mixture of materials constituting the cathode active material layer 12 into pellets or by stretching (extruding) the mixture into sheets. When the cathode layer 10 is prepared by this method, the cathode current collector 11 may be omitted.

(Preparation of solid electrolyte layer)

The solid electrolyte layer 30 includes a solid electrolyte according to an embodiment.

The solid electrolyte layer 30 may further include a general sulfide-based solid electrolyte used in all-solid-state secondary batteries in addition to the above-described solid electrolyte.

For example, the solid electrolyte layer is prepared by applying a mixture of a sulfide-based solid electrolyte, a solvent, and a binder and drying and pressing the mixture. Alternatively, the solid electrolyte layer is prepared by depositing a sulfide-based solid electrolyte obtained by the aforementioned preparation method using a known film forming method such as aerosol deposition, cold spraying, or sputtering. Alternatively, the solid electrolyte layer 30 is prepared by pressing solid electrolyte particles.

(Manufacture of all-solid-state secondary battery)

The cathode layer 10, the anode layer 20, and the solid electrolyte layer 30, which are prepared by the aforementioned methods, are laminated such that the solid electrolyte 30 is provided between the cathode layer 10 and the anode layer 20, and are pressed to manufacture an all-solid-state secondary battery 1.

For example, the solid electrolyte layer 20 is disposed on the anode layer 10 to prepare a second laminate. Subsequently, the anode layer 20 is disposed on the second laminate such that the solid electrolyte layer 30 contacts the first anode active material layer to prepare a third laminate, and the third laminate is pressed to manufacture the all-solid-state secondary battery 1. The pressing is performed at room temperature (about 20 °C to about 25 °C) or at a temperature of 90 °C. Alternatively, the pressing is performed at a high temperature of 100 °C or higher. The pressing time is, for example, 30 minutes or less, 20 minutes or less, 15 minutes or less, or 10 minutes or less. The pressing time is 1 ms to 30 min, 1 ms to 20 min, 1 ms to 15 min, or 1 ms to 10 min. Examples of the pressing include, but are not limited to, isotactic pressing, roll pressing, and flat pressing. Any pressing may be used as long as it is used in the art. Pressure applied during the pressing is, for example, 500 MPa or less, 400 MPa or less, 300 MPa or less, 200 MPa or less, or 100 MPa or less. Pressure applied during the pressing is, for example, about 50 MPa to about 500 MPa, about 50 MPa to about 480 MPa, about 50 MPa to about 450 MPa, about 50 MPa to about 400 MPa, about 50 MPa to about 350 MPa, about 50 MPa to about 300 MPa, about 50 MPa to about 250 MPa, about 50 MPa to about 200 MPa, about 50 MPa to about 150 MPa, or about 50 MPa to about 100 MPa. Solid electrolyte powder is sintered by this pressing to form one solid electrolyte layer.

The configuration and manufacturing method of the aforementioned all-solid-state secondary battery are examples of embodiments, and the structural members, manufacturing processes, and the like thereof may be changed as appropriate.

Hereinafter, methods of preparing a solid electrolyte according to embodiments will be described in more detail with reference Examples and Comparative Examples. In addition, the following Examples are provided for the purpose of illustration only, and the present disclosure is not limited to these Examples.

(Preparation of solid electrolyte)

Example 1

A lithium precursor $Li_2S$, a phosphorus precursor $P_2S_5$, a halogen atom precursor LiC or LiBr, and $Li_2O$ were mixed in a glove box in an Ar atmosphere to obtain a precursor mixture. In the preparation of the precursor mixture, after the contents of $Li_2S$, $P_2S_5$, LiCl, and LiBr were controlled and weighed stoichiometrically to obtain a compound ($Li_{5.5}$ PS4.3 $O_{0.2}$ $Cl_{0.75}Br_{0.75}$), the compound was pulverized and mixed at 100 rpm for 1 hour by a planetary ball mill including zirconia (YSZ) ball in an Ar atmosphere, and then further pulverized and mixed at 800 rpm for 30 minutes to obtain a mixture. The obtained mixture was pressed by an uniaxial press to prepare a pellet having a thickness of about 10 mm and a diameter of 13 mm. The prepared pellet was covered with a gold foil, and put into a carbon crucible. The carbon crucible was sealed in vacuum using a quartz glass tube. The pellet in the carbon crucible sealed in vacuum was heated from room temperature to 450 °C at a temperature increase rate of 1.0 °C/min using an electrical furnace, heat-treated at 500 °C for 12 hours, and then cooled to room temperature at a temperature increase rate of 1.0 °C/min to obtain a solid electrolyte.

Examples 2 to 8

Solid electrolytes were obtained in the same manner as in Example 1, except that the contents of $Li_2S$, $P_2S_5$, LiCl, and LiBr were stoichiometrically changed so as to obtain the solid electrolytes of Table 1 below.

Comparative Examples 1 to 4

Solid electrolytes were obtained in the same manner as in Example 1, except that the contents of $Li_2S$, $P_2S_5$, LiCl, and LiBr were stoichiometrically changed so as to obtain the solid electrolytes of Comparative Examples 1 to 4 inTable 1 below.

[Table 1]

| Class. | Composition of solid electrolyte |
|---|---|
| Example 1 | $Li_{5.5}$ PS4.3 $O_{0.2}$ $Cl_{0.75}$ $Br_{0.75}$ |
| Example 2 | $Li_{5.5}$ PS4.1 $O_{0.4}$ $Cl_{0.75}$ $Br_{0.75}$ |
| Example 3 | $Li_{5.5}$ PS3.5 $O_{1.0}$ $Cl_{0.75}$ $Br_{0.75}$ |
| Example 4 | $Li_{5.3}$ $PS_{4.2}O_{0.1}$ $ClBr_{0.7}$ |
| Example 5 | $Li_{5.3}$ $PS_{4.1}$ O0.2ClBr0.7 |
| Example 6 | $Li_{5.3}$ $PS_{4.0}$ $O_{0.3}ClBr_{0.7}$ |
| Example 7 | $Li_{5.3}$ $PS_{3.9}$ $O_{0.4}ClBr_{0.7}$ |
| Example 8 | $Li_{5.3}$ $PS_{3.8}$ $O_{0.5}ClBr_{0.7}$ |
| Com parative Example 1 | $Li_{5.5}$ $PS_{4.5}Cl_{0.75}Br_{0.75}$ |
| Com parative Example 2 | $Li_{5.3}$ $PS_{4.3}$ $ClBr_{0.7}$ |
| Com parative Example 3 | $Li_{5.3}$ $PS_{4.3}$ $OCl_{1.7}$ |
| Com parative Example 4 | $Li_{5.3}$ $PS_{4.3}$ $OBr_{1\cdot 7}$ |

Preparation Example 1

A cathode active material having a $aLi_2O-ZrO_2$ coating film was prepared according to the method disclosed in Korean Patent Publication No. 10-2016-0064942, but was prepared according to the following method.

$LiNi_{0.8}Co_{0.15}Mn_{0.05}O_2$ (NCM) as a cathode active material, a lithium methoxide, a zirconium propoxide, ethanol, and ethyl acetoactate were stirred and mixed for 30 minutes to prepare an alcohol solution of $aLi_2O-ZrO_2$ (where a=1) (a coating solution for coating $aLi_2O-ZrO_2$). Here, the content of lithium methoxide and zirconium propoxide was adjusted such that the content of $aLi_2O-ZrO_2$(a=1) coated on the surface of the cathode active material is 0.5 mol%.

Next, the coating solution for $aLi_2O-ZrO_2$ was mixed with the cathode active material fine powder to obtain a mixed solution, and the mixed solution was heated to about 40 °C while stirring the mixed solution to evaporate and dry a solvent such as alcohol. In this case, the mixed solution was irradiated with ultrasonic waves.

Through the above process, a precursor of $aLi_2O-ZrO_2$ may be supported on the particle surface of the cathode active material fine powder.

The precursor of $aLi_2O-ZrO_2$ supported on the particle surface of the cathode active material fine powder was heat-treated at about 350 °C for 1 hour under an oxygen atmosphere. During this heat treatment process, the precursor of $aLi_2O-ZrO_2$ (where a=1) present on the cathode active material was changed into $aLi_2O-ZrO_2$ (a=1). The content of $Li_2O-ZrO_2$ (LZO) is about 0.4 parts by weight based on 100 parts by weight of NCM.

According to the aforementioned preparation process, $LiNi_{0.8}Co_{0.15}Mn_{0.05}O_2$ (NCM) having an $aLi_2O-ZrO_2$ coating film may be obtained. In $aLi_2O-ZrO_2$, a is 1.

(Manufacture of all-solid-state secondary battery)

Example 9

(Cathode layer)

As a cathode active material, $LiNi_{0.8}Co_{0.15}Mn_{0.05}O_2$ (NCM) coated with $Li_2O-ZrO_2$ (LZO) obtained according to Preparation Example 1 was prepared.

As a solid electrolyte, solid electrolyte powder prepared in Example 1 was prepared. As a conducting agent, carbon nanofibers (CNF) were prepared. These materials were mixed at a weight ratio of cathode active material: solid electrolyte: conducting agent = 60: 35: 5 to obtain a mixture, and the mixture was molded in the form of a sheet to prepare a cathode sheet. The prepared cathode sheet was pressed on a cathode current collector formed of a carbon-coated aluminum foil having a thickness of 18 μm to prepare a cathode layer. The thickness of the cathode active material layer was 100 μm.

(Anode layer)

As an anode layer, a lithium metal layer having a thickness of about 30 μm was used.

(Solid electrolyte layer)

1 part by weight of styrene-butadiene rubber (SBR) was added to 100 parts by weight of a crystalline argyrodite-based solid electrolyte ($Li_6PS_5Cl$) to prepare a mixture. Xylene and diethyl benzene were added to the mixture, and stirred to prepare a slurry. The prepared slurry was applied onto a nonwoven fabric using a blade coater, and was dried in air at 40 °C to obtain a laminate. The obtained laminate was dried in vacuum at 40 °C for 12 hours. The solid electrolyte layer was prepared by the above process.

A solid electrolyte layer was disposed on an anode layer, and a cathode layer was disposed on the solid electrolyte layer to prepare a laminate. The prepared laminate was plate-pressed by a pressure of 100 MPa at 25 °C for 10 minutes. The solid electrolyte layer was sintered by the pressing process to improve battery characteristics.

Examples 10 to 16

All-solid-state secondary batteries were manufactured in the same manner as in Example 9, except that in preparation of the cathode layer, each of the solid electrolytes of Examples 2 to 8 was used instead of the solid electrolyte of Example 1.

Example 17

An all-solid-state secondary battery was manufactured in the same manner as in Example 9, except that in preparation of the cathode layer, the weight ratio of cathode active material: solid electrolyte: conducting agent = 60: 35: 5 was changed to the weight ratio of cathode active material: solid electrolyte: conducting agent = 85: 10: 5.

Example 18

An all-solid-state secondary battery was manufactured in the same manner as in Example 9, except that in preparation of the cathode layer, the weight ratio of cathode active material: solid electrolyte: conducting agent = 60: 35: 5 was changed to the weight ratio of cathode active material: solid electrolyte: conducting agent = 55: 40: 5.

Comparative Examples 5 to 8

All-solid-state secondary batteries were manufactured in the same manner as in Example 9, except that in the cathode layer, each of the solid electrolytes of Comparative Examples 1 to 4 was used instead of the solid electrolyte of Example 1.

Comparative Examples 9 to 16

Solid electrolytes were prepared in the same manner as in Example 1 such that the solid electrolytes of Comparative Examples 10 to 17 of Table 2 below.

[Table 2]

| Class. | a/b of Formula 1 | Composition of solid electrolyte |
|---|---|---|
| Com parative Example 9 | 0 | $Li_6PS_5Br$ |
| Com parative Example 10 | 0 | $Li_6PS_{4.7}O_{0.3}Br$ |
| Com parative Example 11 | ∞ | $Li_6PS_5Cl$ |
| Com parative Example 12 | ∞ | $Li_6PS_{4.7}O_{0.3}Cl$ |
| Com parative Example 13 | 4 | $Li_{5.3}PS_{4.5}Cl_{1.2}Br_{0.3}$ |
| Com parative Example 14 | 4 | $Li_{5.3}PS_{4.5}O_{0.3}Cl_{1.2}Br_{0.3}$ |
| Com parative Example 15 | 0.25 | $Li_{5.3}PS_{4.2}Cl_{0.3}Br_{1.2}$ |
| Com parative Example 16 | 0.25 | $Li_{5.3}PS_{4.2}O_{0.3}Cl_{0.3}Br_{1.2}$ |

Evaluation Example 1: measurement of ion conductivity

Powder of each of the solid electrolytes prepared in Examples 1 to 8 and Comparative Examples 1 and 2 was put into a mold having a diameter of 10 mm, and pressed at a pressure of 350 mPa to form a pellet as a sample.

Both surface of the sample were provided with indium (In) electrodes each having a thickness of 50 μm and a diameter of 13 mm to prepare a symmetry cell. The preparation of the symmetry cell was carried out in a glove box of an Ar atmosphere.

With respect to the sample in which indium electrodes was provided on both surfaces thereof, the impedance of the pellet was measured by a 2-probe method using an impedance analyzer (Material Mates 7260). The frequency range was 0.1 Hz to 1 MHz, and the amplitude voltage was 10 mV. The impedance was measured at 25 °C in an Ar atmosphere. Resistance values were obtained from the arc of Nyguist plot for the impedance measurement result, and ion conductivity was calculated in consideration of the area and thickness of the sample.

In FIG. 1, in order to compare the ionic conductivity of the solid electrolytes of Examples 1 to 8, the ionic conductivity of the solid electrolytes of Reference Examples 1 to 10 shown in Table 4 below (J. Power Sources 410-411 (2019) 162, Z.Zhang et al.) together.

[Table 3]

| Class. | Ion conductivity (mS/cm) | Class. | Ion conductivity (mS/cm) |
|---|---|---|---|
| Example 1 | 6.9 | Reference Example 1 | 1.5 |
| Example 2 | 7.6 | Reference Example 2 | 1.4 |
| Example 3 | 5.5 | Comparative Example 3 | 1.4 |
| Example 4 | 8.6 | Reference Example 4 | 1.3 |
| Example 5 | 8.3 | Reference Example 5 | 1.4 |
| Example 6 | 8.4 | Reference Example 6 | 1.6 |
| Example 7 | 7.8 | Reference Example 7 | 1.3 |
| Example 8 | 6.8 | Reference Example 8 | 1.3 |
| Com parative Example 1 | 6.1 | Reference Example 9 | 1.2 |
| Com parative Example 2 | 6.3 | Reference Example 10 | 1.1 |

[Table 4]

| Class. | Composition of solid electrolyte |
|---|---|
| Reference Example 1 | $Li_6PS_5Br$ |
| Reference Example 2 | $Li_6PS_{4.95}O_{0.05}Br$ |
| Reference Example 3 | $Li_6PS_{4.85}O_{0.15}Br$ |
| Reference Example 4 | $Li_6PS_{48}Oo_2Br$ |
| Reference Example 5 | $Li_6PS_{4.75}O_{0.25}Br$ |
| Reference Example 6 | $Li_6PS_{4.7}O_{0.3}Br$ |
| Reference Example 7 | $Li_6PS_{4.55}O_{0.45}Br$ |
| Reference Example 8 | $Li_6PS_{44}Oo_6Br$ |
| Reference Example 9 | $Li_6PS_{42}Oo_8Br$ |
| Reference Example 10 | $Li_6PS_4OBr$ |

As shown in FIG. 1 and Table 3, the solid electrolytes of Examples 1 to 8 have improved ion conductivity at room temperature (25 °C) as compared with the solid electrolytes of Reference Examples 1 to 10. In particular, the solid electrolytes of 4 to 7 exhibit improved ion conductivity as compared with the solid electrolytes of Comparative Examples 1 and 2.

The solid electrolyte of Example 1 implements improved ion conductivity at a temperature of 25 °C as compared with the solid electrolyte of Comparative Example 1, and the solid electrolyte of Example 2 implements an ion conductivity of 1 mS/cm or more. Thus, it may be found that the solid electrolyte of Example 1 and the solid electrolyte of Example 2 have ion conductivity suitable for solid electrolytes of all-solid-state secondary batteries.

In addition, the ion conductivity of the solid electrolyte of Example 3 was evaluated in the same manner as in Example 1. As a result of the evaluation, the solid electrolyte of Example 3 implements a level of ion conductivity similar to that of the solid electrolyte of Example 1.

In addition, the ion conductivity of the solid electrolytes of Comparative Examples 9 to 16 was measured in the same manner as the ion conductivity of the solid electrolytes of Examples 1 and 2 and Comparative Examples 1 and 2, and the results thereof are shown in Table 5 below.

[Table 5]

| Class. | a/b of Formula 1 | Composition of solid electrolyte | Ion conductivity (mS/cm) |
|---|---|---|---|
| Com parative example 9 | 0 | $Li_6PS_5Br$ | 1.5 |
| Com parative example 10 | 0 | $Li_6PS_{4.7}O_{0.3}Br$ | 0.9 |

(continued)

| Class. | a/b of Formula 1 | Composition of solid electrolyte | Ion conductivity (mS/cm) |
|---|---|---|---|
| Com parative example 11 | ∞ | $Li_6PS_5Cl$ | 2.3 |
| Com parative example 12 | ∞ | $Li_6PS_{4.7}O_{0.3}Cl$ | 1.7 |
| Com parative Example 13 | 4 | $Li_{5.3}PS_{4.5}Cl_{1.2}Br_{0.3}$ | 4.1 |
| Com parative Example 14 | 4 | $Li_{5.3}PS_{4.5}O_{0.3}Cl_{1.2}Br_{0.3}$ | 4.0 |
| Com parative Example 15 | 0.25 | $Li_{5.3}PS_{4.2}Cl_{0.3}Br_{1.2}$ | 2.5 |
| Com parative Example 16 | 0.25 | $Li_{5.3}PS_{4.2}O_{0.3}Cl_{0.3}Br_{1.2}$ | 2.6 |

Referring FIG. 1 and Table 5, it may be found that the solid electrolytes of Examples 1 to 8 have improved ion conductivity as compared with the solid electrolytes of Comparative Examples 9 to 16.

Evaluation Example 2: XRD analysis

XRD spectra of the solid electrolytes prepared in Examples 1 and 2 and Comparative Example 1 were measured, and the results thereof are shown in FIG. 1. X-ray diffraction analysis was performed using D8 Advance of Bruker Co., Ltd., and Cu K$\alpha$ radiation was used for XRD spectrum measurement.
Referring to FIG. 1, it may be found that the solid electrolytes of Examples 1 to 3 have an argyrodite crystal structure as in Comparative Example 1. The oxide of Example 3 was formed as a low-conductivity $Li_3PO_4$ as shown in FIG. 1. The low-conductivity $Li_3PO_4$ was observed in an area where diffraction angle 2$\theta$ is 22° to 23°.

Evaluation Example 3: oxidation resistance

Charge and discharge characteristics of the all-solid-state second batteries of Examples 9 to 11 and Comparative Example 5 were evaluated by the following charge-discharge tests.
The charge-discharge test was performed by putting the all-solid secondary battery into a chamber at 45 °C.
In the first cycle, the battery was charged with a constant current of 0.1 C until the battery voltage was 4.25 V, and was charged with a constant voltage of 4.25 V until the current was 0.05 C. Subsequently, the battery was discharged with a constant current of 0.1 C until the battery voltage was 4.25 V.
The discharge capacity in the first cycle was defined as a standard capacity.
In the second cycle, the battery was charged for 50 hours with a constant current of 0.1 C and a constant voltage of 4.25 V until the battery voltage was 4.25 V. Subsequently, the battery was discharged with a constant current of 0.1 C until the battery voltage was 4.25 V.
The discharge capacity in the second cycle was defined as a retention capacity.
In the third cycle, the battery was charged with a constant current of 0.1 C until the battery voltage was 4.25 V, and was charged with a constant voltage of 4.25 V until the current was 0.05 C. Subsequently, the battery was left for 50 hours, and was then discharged with a constant current of 0.1 C until the battery voltage was 2.5 V.
The discharge capacity in the third cycle was defined as a recovery capacity.
For each cycle, the battery was rested for 10 minutes after being charged and discharged.
The capacity retention rates of the all-solid-state secondary batteries of Examples 9 to 11 and Comparative Example 5 after high-temperature storage are shown in FIG. 3. In FIG. 3, "Standard" indicates standard capacity, and "Recovery" indicates recovery capacity.
The capacity retention rate after high-temperature storage is calculated by Equation 1 below.

<Equation 1>

$$\text{Capacity retention rate (\%)} = [\text{recovery capacity} / \text{standard capacity}] \times 100$$

As shown in FIG. 3, it may be found that capacity retention rates of the all-solid-state secondary batteries of Examples 9 to 11 are improved as compared with that of the all-solid-state secondary battery of Comparative Example 5.
In addition, the evaluations of the capacity retention rates of the all-solid-state secondary batteries of Examples 15 and 16 employing the solid electrolytes of Examples 7 and 8 after high-temperature storage were carried out in the same manner as the evaluation of the capacity retention rate of the all-solid-state secondary battery of Example 9. The evaluation results are given in Table 6 below. In Table 6, the capacity retention rates of the all-solid-state secondary batteries of Examples 9 to 11 and Comparative Example 5 after high-temperature storage are also given.

[Table 6]

| Class. | Capacity Retention rate (%) |
|---|---|
| Example 9 | 93.4 |
| Example10 | 96.3 |
| Example 11 | 96.5 |
| Example15 | 98.2 |
| Example 16 | 95.8 |
| Com parative | 88.8 |
| Example 5 | |

Referring to Table 6, it may be found that the all-solid-state secondary batteries of Examples 15 and 16, as in the case of Examples 9 to 11, are improved in capacity retention rate after high-temperature storage, as compared with the all-solid-state secondary battery of Comparative Example 5.

In addition, the evaluations of the capacity recovery rates of the all-solid-state secondary batteries of Comparative Examples 6 to 8 employing the solid electrolytes of Comparative Examples 2 to 4 were carried out in the same manner as the evaluation of the capacity recovery rate of the all-solid-state secondary battery of Example 1.

As a result of the evaluation, the all-solid-state secondary batteries of Comparative Example 6 to 8 exhibits an equivalent level of capacity recovery rate as compared with the all-solid-state secondary battery of Comparative Example 5. As such, the all-solid-state secondary batteries of Comparative Examples 7 and 8 including a compound in which only one kind of halogen atom is introduced into the compound of Formula 1 has a capacity recovery rate of 88% or less after high-temperature storage, as in the case of Comparative Example 5, resulting in the deterioration of oxidation resistance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A solid electrolyte comprising: a compound represented by Formula 1 and having an argyrodite crystal structure:

   <Formula 1> $(Li_{1-k}M_k)_{7-(a+b)}PS_{6-(a+b+x)}O_x$ ClaBrb

   wherein, in Formula 1,M is sodium (Na), potassium (K), calcium (Ca), iron (Fe), magnesium (Mg), silver (Ag), copper (Cu), zirconium (Zr), zinc (Zn), or a combination thereof, and
   $0.5 \leq a/b \leq 1.5$, $0<a<2$, $0<b<2$, $0<x \leq 1$, $0 \leq k< 1$, and $x<3-(a+b)/2$ are satisfied.

2. The solid electrolyte of claim 1, wherein, in Formula 1,$|2-(a+b+x)| \leq 1$ is satisfied.

3. The solid electrolyte of claim 1, wherein $1 \leq a/b \leq 1.5$ is satisfied.

4. The solid electrolyte of claim 1, wherein, in Formula 1, x is about 0.1 to about 1.

5. The solid electrolyte of claim 1, wherein the compound of Formula 1 is a compound represented by Formula 2:

   <Formula 2> $Li_{7-(a+b)}PS_{6-(a+b+x)}O_xCl_aBr_b$

   wherein, in Formula 2, $0.5 \leq a/b \leq 1.5$, $0<a<2$, $0<b<2$, $0<x \leq 1$, and $x<3-(a+b)/2$ are satisfied.

**6.** The solid electrolyte of claim 1, wherein the compound of Formula 1 is a compound represented by Formula 3:

<Formula 3> $Li_{5.3}PS_{4.3-x}O_xClBr_{0.7}$

wherein, in Formula 3,0<x≤ 1 is satisfied.

**7.** The solid electrolyte of claim 1, wherein the compound of Formula 1 is a compound represented by Formula 4, a compound represented by Formula 5, a compound represented by Formula 6, or a combination thereof:

<Formula 4> $Li_{5.5}PS_{4.5-x}O_xCl_{0.75}Br_{0.75}$

wherein, in Formula 4,0<x≤1 is satisfied,

<Formula 5> $Li_{5.5}PS_{4.5-x}O_xCl_{0.5}B$

wherein, in Formula 5,0<x≤1 is satisfied, and

<Formula 6> $Li_{5.3}PS_{4.3-x}O_xCl_{0.7}Br$

wherein, in Formula 6,0<x ≤ 1 is satisfied.

**8.** The solid electrolyte of claim 1, wherein the compound of Formula 1 is $Li_{5.5}PS_{4.3}O_{0.2}Cl_{0.75}Br_{0.75}$, $Li_{5.5}PS_{4.1}O_{0.4}Cl_{0.75}Br_{0.75}$, $Li_{5.5}PS_{3.5}O_{0.1}Cl_{0.75}Br_{0.75}$, $Li_{5.3}PS_{4.2}O_{0.1}ClBr_{0.7}$, $Li_{5.3}PS_{4.1}O_{0.2}ClBr_{0.7}$, $Li_{5.3}PS_{4.0}O_{0.3}ClBr_{0.7}$, $Li_{5.3}PS_{3.9}O_{0.4}ClBr_{0.7}$, $Li_{5.3}PS_{3.8}O_{0.5}ClBr_{0.7}$, $Li_{5.5}PS_{4.3}O_{0.2}Cl_{0.5}Br$, $Li_{5.5}PS_{4.1}O_{0.4}Cl_{0.5}Br$, $Li_{5.5}PS_{3.5}O_{1.0}Cl_{0.5}Br$, $Li_{5.3}PS_{4.2}O_{0.1}Cl_{0.7}Br$, $Li_{5.3}PS_{4.1}O_{0.2}Cl_{0.7}Br$, $Li_{5.3}PS_{4.0}O_{0.3}Cl_{0.7}Br$, $Li_{5.3}PS_{3.9}O_{0.4}Cl_{0.7}B$, $Li_{5.3}PS_{3.8}O_{0.5}Cl_{0.7}Br$, or a combination thereof.

**9.** The solid electrolyte of claim 1, wherein the solid electrolyte has an ion conductivity of 1mS/cm or more at room temperature (25 °C).

**10.** An electrochemical battery comprising:

a cathode layer; an anode layer; and a solid electrolyte layer between the cathode layer and the anode layer, wherein at least one selected from the cathode layer, the anode layer, and the solid electrolyte layer includes the solid electrolyte of any one of claims 1 to 9.

**11.** The electrochemical battery of claim 10, wherein the cathode layer includes a solid electrolyte including a compound represented by Formula 1 and having an argyrodite crystal structure:

<Formula 1> $(Li_{1-k}M_k)_{7-(a+b)}PS_{6-(a+b+x)}O_x$ ClaBrb

wherein, in Formula 1,M is sodium (Na), potassium (K), calcium (Ca), iron (Fe), magnesium (Mg), silver (Ag), copper (Cu), zirconium (Zr), zinc (Zn), or a combination thereof, and
0.5 ≤ a/b ≤ 1.5, 0<a<2, 0<b<2, 0<x ≤ 1, 0 ≤ k< 1, and x≤3-(a+b)/2 are satisfied.

**12.** The electrochemical battery of claim 11, wherein the cathode layer includes a cathode active material, a solid electrolyte, and a conducting agent, and the content of the solid electrolyte in the cathode layer is about 2 parts by weight to about 70 parts by weight based on 100 parts by weight of the cathode active material.

**13.** The electrochemical battery of claim 11, wherein the electrochemical battery has a capacity retention rate of 90 % or more after left at 45 °C for 50 hours under a condition of 4 V or more.

**14.** The electrochemical battery of claim 9, wherein the anode layer includes a first anode active material layer including an anode current collector and an anode active material on the anode current collector, and
the anode active material includes at least one selected from a carbon-based anode active material and a metal or metalloid anode active material.

**15.** The electrochemical battery of claim 14, wherein the carbon-based anode active material includes at least one selected from amorphous carbon and crystalline carbon, and
the metal or metalloid anode active material includes at least one selected from gold (Au), platinum (Pt), palladium (Pd), silicon (Si), silver (Ag), aluminum (Al), bismuth (Bi), tin (Sn), and zinc (Zn).

**16.** The electrochemical battery of claim 11, further comprising: a second anode active material layer between the anode current collector and the first anode active material layer and/or between the solid electrolyte layer and the first anode active material layer,
wherein the second anode active material layer is a metal layer including lithium or a lithium alloy.

**17.** The electrochemical battery of claim 11, wherein the cathode layer includes a cathode active material and the cathode active material is at least one selected from a lithium transition metal oxide having a layered crystal structure, a lithium transition metal oxide having an olivine crystal structure, and a lithium transition metal oxide having a spinel crystal structure.

**18.** The electrochemical battery of claim 11, wherein the electrochemical battery is an all-solid-state secondary battery.

**19.** A method of preparing a solid electrolyte, the method comprising:

mixing a lithium (Li) precursor, a phosphorus (P) precursor, and a halogen atom (X) precursor to provide a precursor mixture; and
reacting and heat-treating the precursor mixture, wherein the solid electrolyte of any one of claims 1 to 9 is prepared.

**20.** The method of claim 19, wherein the heat treatment is carried out at 250 °C to 700 °C.

FIG. 1

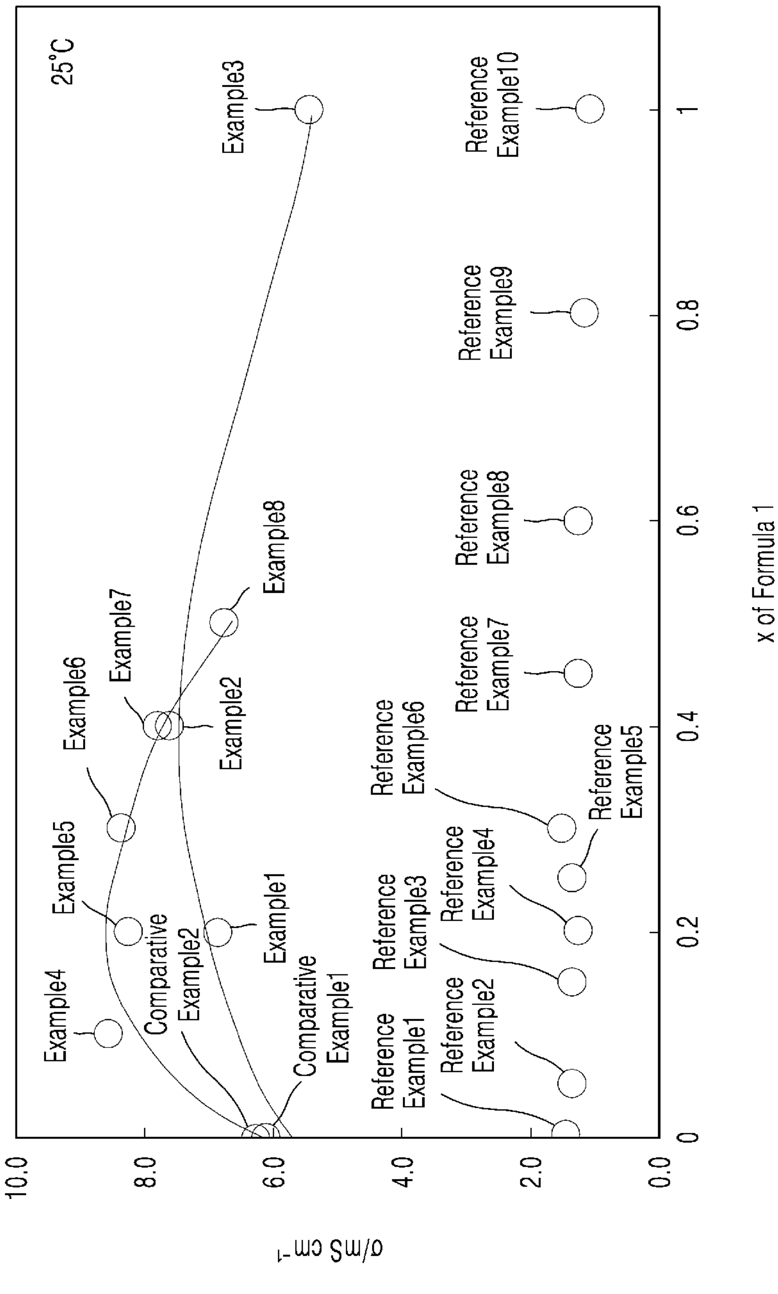
25°C
σ/mS cm⁻¹
x of Formula 1
10.0
8.0
6.0
4.0
2.0
0.0
0
0.2
0.4
0.6
0.8
1
Example1
Example2
Example3
Example4
Example5
Example6
Example7
Example8
Comparative Example1
Comparative Example2
Reference Example1
Reference Example2
Reference Example3
Reference Example4
Reference Example5
Reference Example6
Reference Example7
Reference Example8
Reference Example9
Reference Example10

FIG. 2

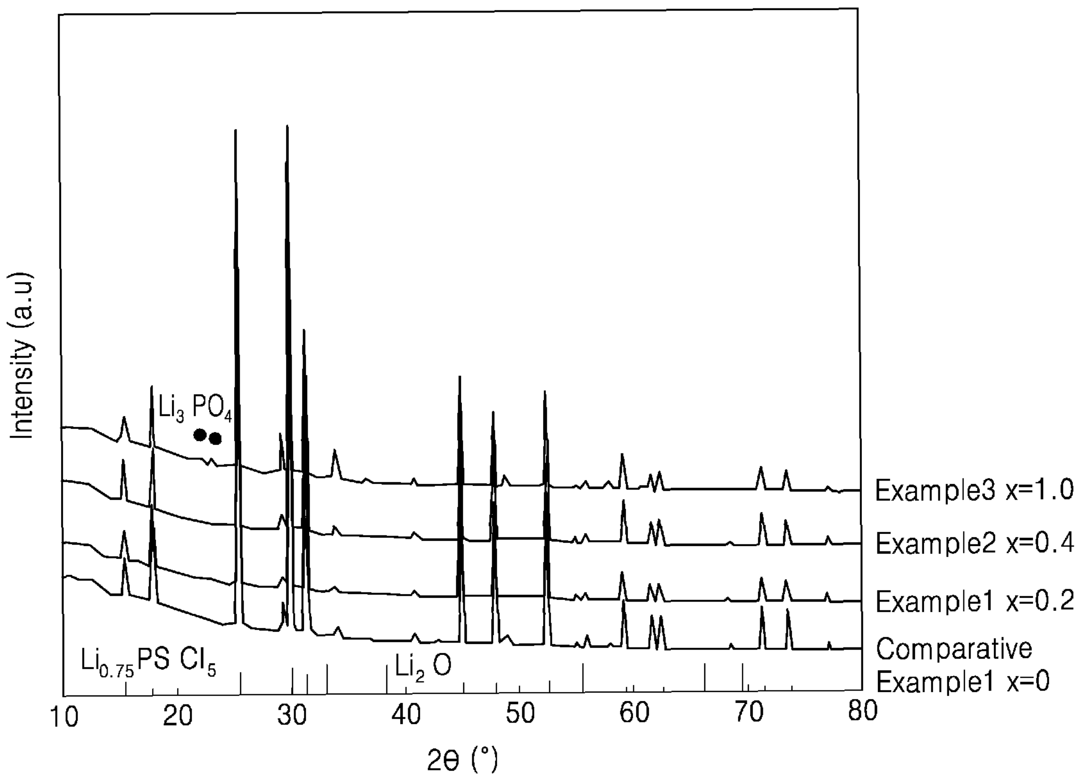
Intensity (a.u)
Li3 PO4
Li0.75PS Cl5
Li2 O
Example3 x=1.0
Example2 x=0.4
Example1 x=0.2
Comparative Example1 x=0
10
20
30
40
50
60
70
80
2θ (°)

FIG. 3

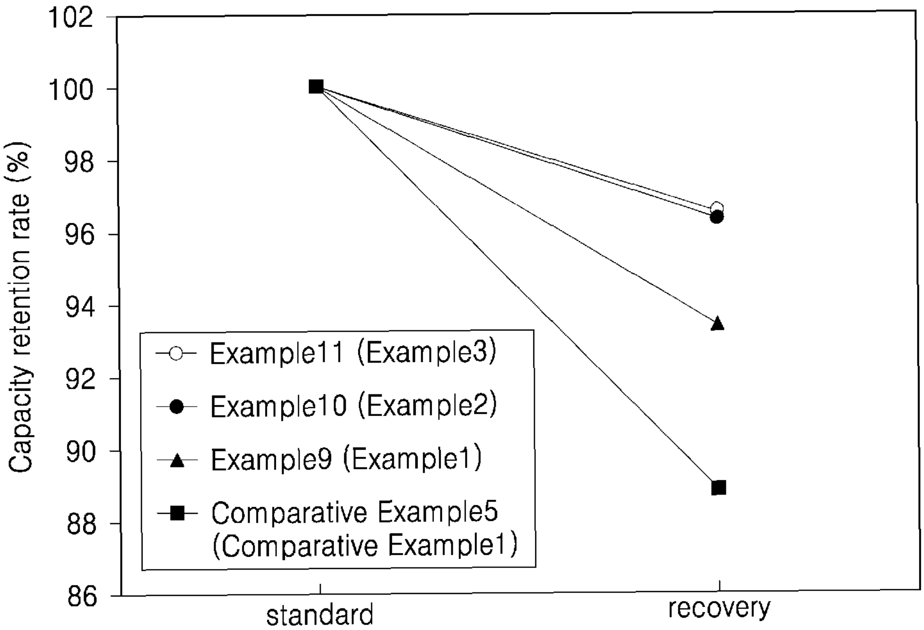
102
100
98
96
94
92
90
88
86
Capacity retention rate (%)
standard
recovery
Example11 (Example3)
Example10 (Example2)
Example9 (Example1)
Comparative Example5
(Comparative Example1)

FIG. 4

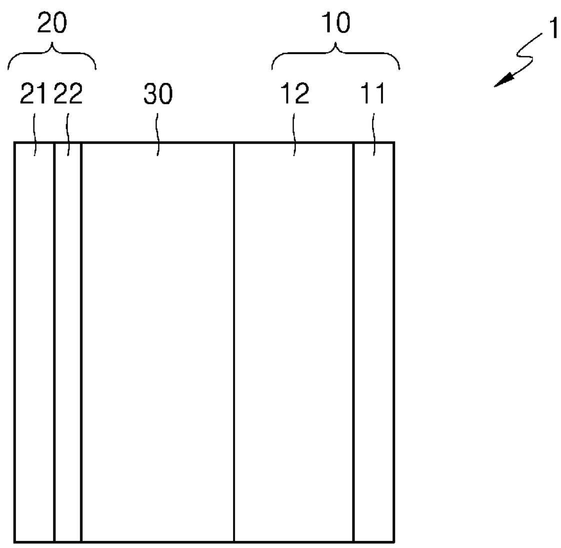

FIG. 5

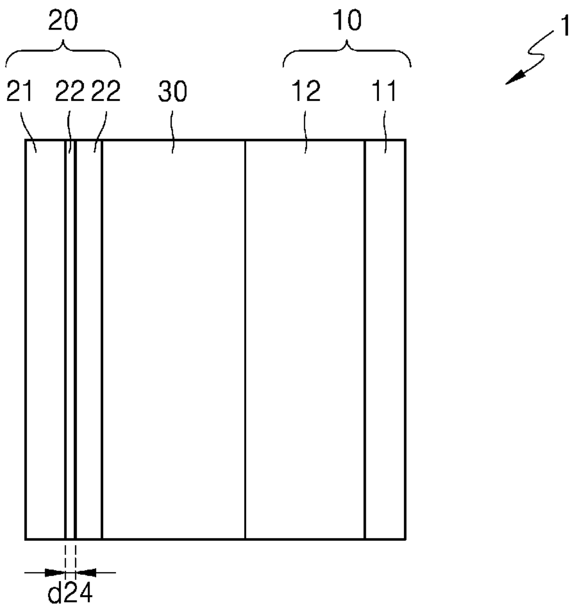

FIG. 6

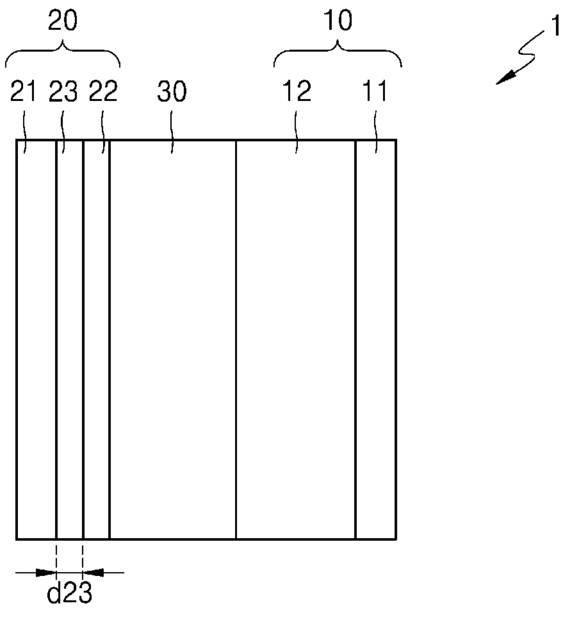

## INTERNATIONAL SEARCH REPORT

International application No.
**PCT/KR2021/001011**

**A. CLASSIFICATION OF SUBJECT MATTER**

**H01M 10/0562**(2010.01)i; **H01M 4/62**(2006.01)i; **H01M 10/052**(2010.01)i; **C01B 25/14**(2006.01)i; **H01B 1/06**(2006.01)i

According to International Patent Classification (IPC) or to both national classification and IPC

**B. FIELDS SEARCHED**

Minimum documentation searched (classification system followed by classification symbols)

H01M 10/0562(2010.01); H01B 1/06(2006.01); H01B 1/10(2006.01); H01M 10/052(2010.01); H01M 10/0525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 아지로다이트(argyrodite), 이온 전도도(ion conductivity), 황(sulfur), 염소(chlorine, Cl), 브롬(bromine, Br)

**C. DOCUMENTS CONSIDERED TO BE RELEVANT**

| Category* | Citation of document, with indication, where appropriate, of the relevant passages | Relevant to claim No. |
|---|---|---|
| A | KR 10-1952196 B1 (KOREA ELECTRONICS TECHNOLOGY INSTITUTE) 26 February 2019 (2019-02-26)<br>See claims 1, 9, 12 and 17; and paragraphs [0092], [0094], [0095], [0104], [0105], [0118], [0130] and [0133]-[0135]. | 1-20 |
| A | KR 10-2020-0000849 A (SION POWER CORPORATION et al.) 03 January 2020 (2020-01-03)<br>See entire document. | 1-20 |
| A | KR 10-2016-0010492 A (QUANTUMSCAPE CORPORATION) 27 January 2016 (2016-01-27)<br>See entire document. | 1-20 |
| A | KR 10-2019-0039123 A (IDEMITSU KOSAN CO., LTD.) 10 April 2019 (2019-04-10)<br>See entire document. | 1-20 |
| A | JP 6595152 B2 (MITSUI MINING & SMELTING CO., LTD.) 23 October 2019 (2019-10-23)<br>See entire document. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 May 2021** | **04 May 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/001011**

| Patent document cited in search report | Publication date (day/month/year) | Patent family member(s) | Publication date (day/month/year) |
|---|---|---|---|
| KR 10-1952196 B1 | 26 February 2019 | US 2020-0381772 A1 | 03 December 2020 |
| | | WO 2019-107879 A1 | 06 June 2019 |
| KR 10-2020-0000849 A | 03 January 2020 | CN 110785885 A | 11 February 2020 |
| | | JP 2020-522091 A | 27 July 2020 |
| | | US 2018-351148 A1 | 06 December 2018 |
| | | WO 2018-218057 A2 | 29 November 2018 |
| KR 10-2016-0010492 A | 27 January 2016 | CN 105518906 A | 20 April 2016 |
| | | EP 2997611 A2 | 23 March 2016 |
| | | JP 2016-519412 A | 30 June 2016 |
| | | US 2015-0171465 A1 | 18 June 2015 |
| | | WO 2014-186634 A2 | 20 November 2014 |
| KR 10-2019-0039123 A | 10 April 2019 | CN 109526242 A | 26 March 2019 |
| | | EP 3499629 A1 | 19 June 2019 |
| | | EP 3499629 A4 | 29 January 2020 |
| | | JP 2019-030436 A1 | 13 June 2019 |
| | | JP 6679730 B2 | 15 April 2020 |
| | | US 2019-0221884 A1 | 18 July 2019 |
| | | WO 2018-030436 A1 | 15 February 2018 |
| JP 6595152 B2 | 23 October 2019 | CN 110800149 A | 14 February 2020 |
| | | EP 3629412 A1 | 01 April 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160064942


### Non-patent literature cited in the description


- **Z.ZHANG.** *J. Power Sources,* 2019, vol. 162, 410-411